Europäisches Patentamt

European Patent Office

Office européen des brevets

(19)

(11) **EP 1 467 204 A2**

(12) **EUROPEAN PATENT APPLICATION**

(43) Date of publication:
**13.10.2004 Bulletin 2004/42**

(51) Int Cl.$^7$: **G01N 30/78**, G01N 30/86

(21) Application number: **04405222.3**

(22) Date of filing: **08.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **09.04.2003 US 410373**
**07.08.2003 US 636153**
**04.12.2003 US 728182**
**16.03.2004 US 801409**

(71) Applicant: **ISCO, Inc.**
**Lincoln Nebraska 68504 (US)**

(72) Inventor: **The designation of the inventor has not yet been filed**

(74) Representative: **Savatier, Yves et al**
**Moinas & Savoye SA,**
**42, rue Plantamour**
**1201 Geneve (CH)**

Remarks:
Claim 14-16, 18-25, 27, 29-95 are deemed to be abandoned due to non-payment of the claims fee (Rule 31 (2) EPC).

(54) **Method and apparatus to enhance the signal to noise ratio in chromatography**

(57)    Signals obtained in capillary High Performance Liquid Chromatography (HPLC) are notoriously noisy. The signal can be improved by increasing the path length of the light passing through the sample stream, but increased path length decreases resolution (resolving $N$ closely spaced peaks in the actual separation into $N$ peaks of almost equal separation on the chromatogram. A novel approach is to utilize a number of photocell sensors lined up along a capillary through which the solution passes. In one embodiment of this invention, the flow of the solution is stopped with the solvent spike oriented with a particular photocell sensor. Then a single, continuous scan or multiple scans of a section of the quiescent solution may be taken and integrated, summed, or statistically correlated. In another embodiment, a solvent spike is detected and tracked. A set of photocell sensors is chosen at increments of time such that the leading photocell is at the solvent spike. The set of photocells is scanned repeatedly. The important information, contained in the integrated, summed or correlated signal, will increase the chromatographic signal relative to the noise information. In this way, the effective path length is increased without including any moving parts or significant loss of resolution.

EP 1 467 204 A2

## Description

## BACKGROUND OF THE INVENTION

Field of the Invention

The present invention relates generally to a method and apparatus for increasing the signal to noise ratio of a signal received from a photocell used in capillary High Performance Liquid Chromatography (HPLC), Capillary Electrophoresis (CE) or Capillary Electroendoosmosis Chromatography (CEC). For instance, in capillary HPLC a capillary tube serves as the chromatographic column. If the capillary is an open tube, its inside diameter may be from 10μm (detector sensitivity) to 100μm (detector volume). Packed capillary columns have analogous volume limits.

More particularly the present invention makes use of a plurality of photocells. In one embodiment, the photocells are used to detect a solvent spike (absorbance spike or refractive index spike) of a quiescent fluid. In another embodiment, a set of photocells receive light through the same particle of fluid by accurately tracking the solvent spike as it passes the linear array of photocells. In either case, the signals created by all the photocells are summed or integrated over time to increase the signal to noise ratio. In still another embodiment, a noisy signal is divided up into segments. Within each segment, the signal is summed or integrated. This invention applies to HPLC, CE, and CEC. References herein to capillary chromatography or capillary HPLC may also apply to CEC and CE. "Solvent spike" in the claims and elsewhere includes both relating to an absorbance spike as well as refractive index spikes.

Because the present invention is applicable to HPLC, CE, and CEC, these three will be referred to collectively hereinafter as "capillary separation schemes." The term "separation schemes" will encompass all the above, plus those used with small volume columns.

Background Art

To identify components and their concentration in a mixture of solute and solvent using high performance liquid chromatography, light is passed through the solution. The light that is neither reflected nor absorbed impinges on a photocell, where the intensity of the light is converted to an electrical signal. The intensity of the light hitting the photocell is related to the concentration of a particular solute in the solution. Sensitivity of this system is proportional to the path length of the light as it passes through the sample. Recall that the solution is contained in a capillary tube. Increasing the optical path length in the "usual fashion," however, invites problems related to widening and "blurring" of peaks because of Poiseulle flow distribution or worse, separation, recirculation, or a flow with a helical path, along the light path.

Sources of noise in the signal include the light source, thermal effects, and turbulence in the flow of the solution. The signal to noise ratio of the signal produced by a single, stationary photocell may be too low to be useful. It becomes difficult or impossible to pick out peaks in the signal because the signal is extraordinarily low and the noise level is as high as in a larger diameter (e.g. 4.7 mm i.d.) chromatographic flow system. A signal to noise ratio of about 2 is considered the lowest acceptable. To overcome this difficulty, it is possible to move the light source and photocell along a capillary tube through which the solute is flowing; or to move the capillary tube past the light source and sensor. The relative velocity at which the capillary tube moves compared to the light source and photocell is equal to the maximum velocity (in any infinitesimally thin slice of fluid in cross-section) of the fluid. The purpose is to generate a "signature" of a particular particle of fluid moving at the centerline speed of the flow. This approach has its weaknesses, including the need for accurately correlating the relative positions of the detector and capillary tube with the peaks observed. The need for moving parts or specially triggered and secondarily detected flash from a flashlamp increases the complexity of the apparatus and the potential for failure.

R. E. McKean, in his University of Massachusetts Ph.D. dissertation "Improving the Signal-to-Noise Ratio by Cross Correlation in Flow Injection Analysis and High Performance Liquid Chromatography" (1990) revealed a method for reducing the signal to noise ratio in high performance liquid chromatography. His approach was to produce a clean (relatively noise free) signal in an artificial setting with high concentrations of the solutes. This clean signal was then cross correlated with the noisy signals produced in the usual settings. Although this approach was successful, it brings up the question of how to produce a clean signal when the solutes are unknown. Also, McKean used chromatography equipment of the late 1980's.

McKean discusses the ensemble averaging of multiple signals to improve the signal to noise ratio. He does not, however, suggest the use of multiple sensors and indicates the averaging approach would be "time consuming" for high performance liquid chromatography, presumably due to needing to run multiple identical samples past a single sensor. McKean, because his research focused on his cross correlation method, was not motivated to utilize multiple sensors for summing or averaging signals in a complete chromatogram.

Another novel approach was suggested by Hjerten in U.S. 5,114,551 in which a single detector was used to pick up a signal at multiple locations on the capillary. This was done by looping the capillary around and returning back to the light source and sensor location. A relatively small improvement in the signal to noise ratio would be realized with this method due to the limited number of chromatograms that can feasibly be taken. In one embodiment of this invention, the capillary tube is moved laterally in order to move a new portion of the capillary tube between the light source and sensor. This is an unnecessary complication, requiring control circuitry and moving parts that can fail. The flow, too, is not favorably enhanced by looping or by moving the capillary tube.

There is, therefore, a need for a way to significantly improve the signal to noise ratio of the signal produced by photocells in capillary high-pressure liquid chromatography with no moving parts.

Summary of the Invention

A purpose of this invention is to provide a method and device capable of producing a substantially clean signal in high-pressure liquid chromatography. Another purpose of the present invention is to carry out the aforementioned purpose with no moving parts. As part of these purposes, an objective of the present invention is to accurately track a leading edge indicator, such as a solvent spike or opaque fluid plug as it flows along its capillary tube.

It is well known that the sensitivity of a chromatograph, produced by any of the capillary separation schemes, HPLC, CE, or, CEC, is directly proportional to the path length of a beam of light passing through the sample. An indirect method of increasing this path length is to repeatedly take a chromatograph of the same particle of solution. A linear array of monochromatic light sources and sensor photocells are aligned parallel with a polished quartz capillary tube. Some of the first photocells encountered by the solvent spike are used to accurately locate the leading edge indicator, positively identifying a fluid particle. The leading edge indicator may be a solvent spike or a plug of fluid having significantly different optic characteristics than the solution and is a relatively large fluid particle about the same size as the injection volume. A solvent spike arises when the injecting solvent has a refractive index differing from that of the eluting solvent at the same time and location as the injection. Because the scanning tube is a cylinder, the light seen by each photocell varies sharply as the solvent spike (refractive index spike) passes them by. It differs from the absorbance (chromatographic) signal in that the solvent spike is usually taller and arrives first. Therefore it is easy to detect as it is located or goes past any photocell location. In applications involving CE or CEC, and sometimes also capillary HPLC, the solvent spike may be replaced by an unretained, or otherwise leading UV absorbing reference peak. This is accomplished by including a selected absorbance reference material added to the sample. In a first embodiment of the invention, the flow of the solution is stopped within the capillary tube at a moment when the leading edge indicator is oriented at a known photocell. The cessation of the flow is accomplished using a three-way valve. At the moment the leading edge indicator is located at a predetermined photocell, such as the 1000th photocell, the three-way valve is actuated to divert the solution to a waste port, thereby relieving the solution in the capillary tube of its pressure. The solution will continue to flow in the capillary tube until the pressure is relieved. Once the solution in the capillary tube is quiescent, the photocell sensors in the linear array are used to scan the solution to obtain a chromatogram for the particular sample. Each photocell will either scan repeatedly, and the scans summed, averaged, or statistically correlated, or the scan will be taken over time and integrated.

In a second embodiment of the invention, the solution flows as usual and a solvent spike in the solution is accurately tracked as it is scanned by a series of photocells in the linear array. Signals from each of the photocells, as the same particle of fluid passes through the associated light beam, are summed or statistically correlated. Because the same particle of solution is being tested, the pertinent information in the signal is the same for each reading. The noise should not be correlated to this method of taking multiple readings. The resulting sum (or average, or statistical correlation) has an improved signal to noise ratio because the signal is strengthened by a factor of $N$ (where $N$ is the number of photocell sensors used to scan a particular fluid particle), while the noise is only strengthened by a factor of $\sqrt{N}$ (assuming white noise).

A third embodiment of the invention is described as follows. The chromatogram signal may be divided up into segments, each segment having a predetermined size based on fluid volume or flow. A total number of groups is ten or more. Within each of the segments, the signal segments are summed, integrated, or statistically correlated. Then the resulting signal or values for all segments are concatenated to produce a total signal having less noise than the original. This embodiment is particularly adapted for use with a sequential separation technique, such as a chromatogram. However, the present embodiment is not limited to such a sequential separation technique, nor even the use of a plurality of sensors. Any analog or digital signal may be operated on as specified, above. The segments of this third embodiment may or may not overlap.

The novel features believed to be characteristic of this invention, both as to its organization and method of operation together with its further objectives and advantages, will be better understood from the following description considered in connection with the accompanying drawings in which a presently preferred embodiment of the invention is illustrated by way of example. It is to be expressly understood however, that the drawings are for the purpose of illustration and description only and not intended as a definition of the limits of the invention.

Brief Description of the Drawings

Fig. 1 shows a light source, capillary tube and photocell sensors.

**Fig. 2** shows a flow chart showing steps for carrying out the present invention with a quiescent solution and taking a continuous reading.

**Fig. 3** shows a flow chart showing steps for carrying out the present invention with a quiescent solution and taking multiple readings.

**Fig. 4** shows how information is carried from an array of photocell sensors, ultimately to a chromatogram when the solution is quiescent during scanning.

**Fig. 5** shows a representative clean signal produced by a linear array of 1024 photocell sensors.

**Fig. 6** shows a representative noisy signal produced by a linear array of 1024 photocell sensors.

**Fig. 7** shows a cleaned signal produced using the methods of the present invention with a linear array of 1024 photocell sensors.

**Fig. 8** is a flow chart showing steps for carrying out the present invention with a flowing solution.

**Fig. 9** shows how information is carried from an array of photocell sensors, ultimately to a chromatogram when the solution is flowing during scanning.

**Fig. 10** shows a representative clean signal produced over time by a photocell sensor.

**Fig. 11** shows a representative noisy signal produced over time by a photocell sensor.

**Fig. 12** shows a representative cleaned signal produced over time by a photocell sensor.

**Fig. 13** shows a noisy signal subdivided into sections.

**Fig. 14** shows a piecewise averaged signal.

**Fig. 15** shows a process going from a noisy signal subdivided into sections to a piecewise averaged signal.

**Fig. 16** shows a process diagram for converting a noisy signal to a cleaner signal.

**Fig. 17** shows a noisy signal being denoised by a running average, integration, or statistical correlation.

Best Mode for Carrying Out the Invention

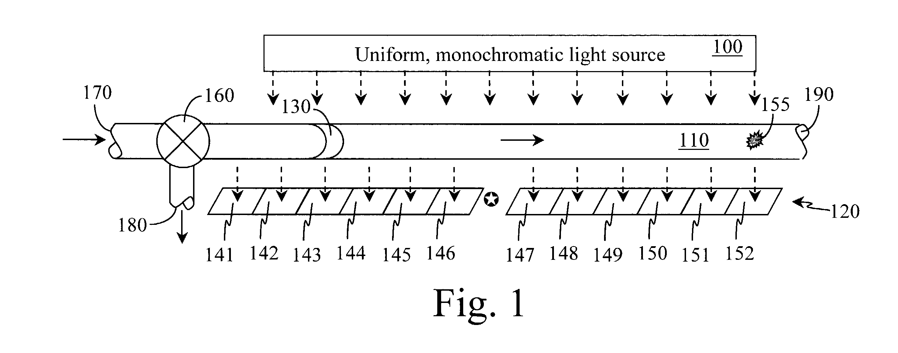

In **Fig. 1** a schematic of an apparatus for the present invention is depicted. A uniform, monochromatic light source (or sources) **100** lines one side of a polished, quartz capillary tube **110**. Directly opposite (on the other side of the capillary tube **110**) is a linear array of photocell sensors **120**. (Only twelve individual photocell sensors **141-152** are shown in **Fig. 1,** however, in practice many more individual photocell sensors **141-152** would be used.) Some of the light emitted from the light source **100** is reflected off the capillary tube **110** and the solution flowing through the capillary tube. Some of the light is absorbed by the solution. That light not reflected or absorbed, passes through the capillary tube **110** and the solution flowing in the capillary tube. Each of the photocell sensors **141-152** creates a signal related to the light intensity of the light that impinges on it. An identifying feature of the components of the solution is the amount of light absorbed.

A signal of interest is one over a period of time. A fluid particle **130** is defined as a small mass of fluid of fixed identity. As a fluid particle **130** of the solution is scanned by a photocell **141-152**, a signal is recorded based on the light passing through the fluid particle **130** and impinging on the photocell sensor **141-152.**

In the first embodiment of the present invention, the fluid is quiescent when the scanning step is carried out. Therefore, any given photocell **141-152** records data for a single fluid particle **130**. The data recorded might be an integral of each individual photocell's **141-152** continuous signal over time, or a summation, average or statistical correlation of a series of the photocell's **141-152** signals taken sequentially over time. If the readings are taken sequentially, the frequency at which readings are taken must be greater than the frequency of any significant high frequency noise. The total time over which readings are taken must be several times greater than any significant low frequency noise. This total time will be on the order of 10-20 seconds, and preferably no longer than a minute in most cases.

After readings are taken from each photocell **141-152,** the integrated, averaged, or correlated signals are concatenated into a new signal having a greater signal to noise ratio than the original.

To halt the flow, a three-way valve **160** is provided at an inlet to the capillary tube **110**. An indication **155** of the leading edge of the chromatograph sample, such as a solvent spike or a fluid plug having significantly different optic characteristics than the solution of interest (an opaque fluid plug is an example), is tracked by its signature on the photocells **141-152.** When the leading edge indicator **155** reaches a predetermined photocell **141-152,** such as the 1000th photocell, the solution entering the three-way valve **160** at its inlet **170** is redirected by the three-way valve to the inlet waste port **180**. Because the fluid has a finite bulk modulus of elasticity, the fluid may continue to flow before it stops as the pressure is relieved in the capillary tube **110** so that the leading edge indicator may travel beyond the 1000th photocell. Some of the sample may exit the capillary tube **110** at the outlet waste port 190. When the pressure is relieved, the flow will cease.

In the second embodiment of the present invention, the same particle of fluid **130** travels past each of the photocell sensors **141-152** in turn. The velocity of the fluid particle **130** is determined as follows. A location of a solvent spike is detected using the first photocell sensors **141-152** the solvent spike encounters. For instance, 1000 photocell sensors **141-152** in an array **120** of 2048 photocell sensors may be used to detect a solvent spike. It is known that the solvent spike is a fluid particle about the same size as the injection volume. The solvent spike is formed when the injecting solvent has a refractive index differing from that of the eluting solvent at the same time and location as the injection. The light detected by each photocell sensor **141-152** varies sharply as the solvent spike (refractive index spike) passes between the light source **100** and a photocell sensor **141-152**. The signal produced by a photocell sensor **141-152** when the solvent spike is scanned differs from the absorbance (chromatographic) signal in that the signal due to the solvent spike is usually taller and arrives before other peaks. The said spike may also be an absorbance spike. Once the spike has been detected, its velocity is determined using a small number of additional photocell sensors **141-152**, for instance, as the spike passes from the 1000th photocell sensor to the 1005th photocell sensor. This velocity, in photocell sensors per unit time, is multiplied by a predetermined factor, for example 1001, to obtain a scanning speed, again in photocells per unit time.

Using this scanning speed, a number of photocell sensors **141-152** equal to the predetermined factor (e.g. 1001) are scanned. Using the example, above, the 6th through the 1006th photocell sensors are scanned. At the end of this scan, the solvent spike is again located using the data just obtained from the photocell sensor scan. The solvent spike should be at the last photocell sensor from which data were obtained. According to our example, the solvent spike should be located at the 1006th photocell sensor. If the solvent spike is not located at the correct sensor, the solvent spike velocity is recalculated from the new data, a new scanning velocity is calculated and the process repeated using the correct bank of photocell sensors **141-152.** In our example, this new correct bank of photocell sensors **141-152** for the next step would be the 7th through the 1007th photocell sensors.

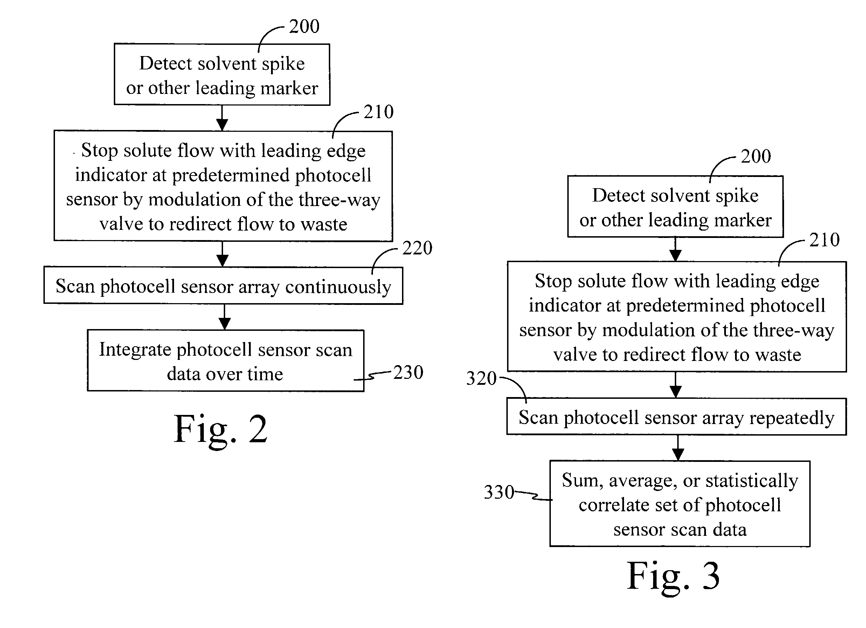

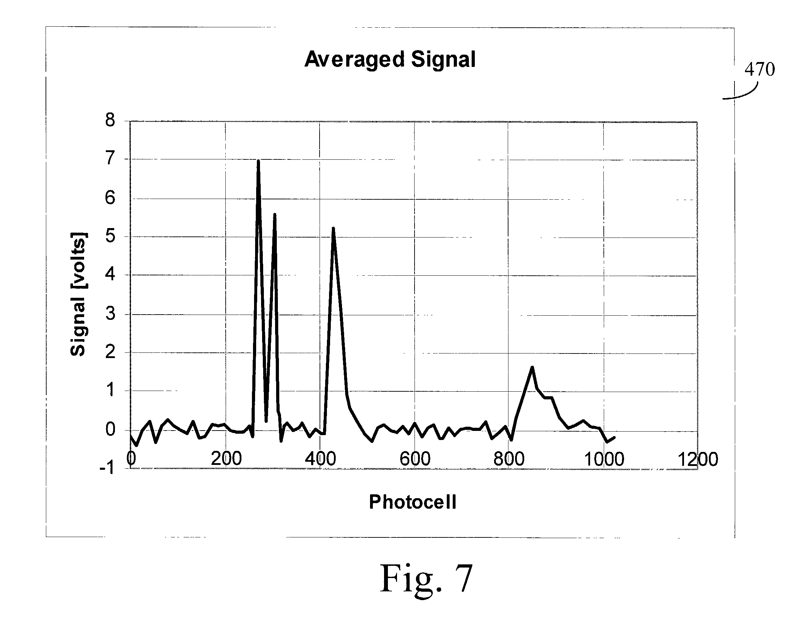

**Figs. 2** and **3** depict flow diagrams for the first preferred embodiment wherein the solute is quiescent when scanned. Initially, the solute is pumped into the capillary tube **110**. The location of the solvent spike or other leading edge indicator **155**, such as a plug of fluid having different optic qualities than the solution, is detected **200** as the solute flows in the same manner as described above. When the solvent spike arrives at a predetermined photocell sensor **141-152,** for example the 1000th in an array **120** of 1024 photocell sensors, the solute flow is stopped **210,** by stopping the pump, or by closing a valve, or redirecting the flow to the inlet waste port **180** with a three-way valve **160**. With the solute in a quiescent state, and the solvent spike located at a known photocell sensor **141-152,** all the photocell sensors **141-152** in the array **120,** or a predetermined subset of the photocell array **120,** are scanned continuously **220** (**Fig. 2**) for a predetermined duration sufficient to suppress all the significant low frequency noise. The result of this continuous scan is integrated **230** in the photocell sensor **141-152** if its charge storage capacity is adequate, or in a separate integrator for each photocell sensor **141-152**. The resulting information is a plot of the light passing through the capillary tube **110** with the independent variable (abscissa) being the photocell number from which the signal was taken (see **Fig. 7**). This abscissa can easily be converted to the location along the capillary tube **110**, x, if preferred.

In **Fig. 3**, the same approach as that shown in **Fig. 2** is taken, except that instead of a continuous scan **220**, scans are taken repeatedly **320** and then summed, averaged, or statistically correlated **330** to produce the reduced-noise signal. The frequency at which these sequential readings are taken must be sufficiently height for the suppression of significant high frequency noise. The total time over which the sequential readings are taken must be adequate to suppress significant low frequency noise.

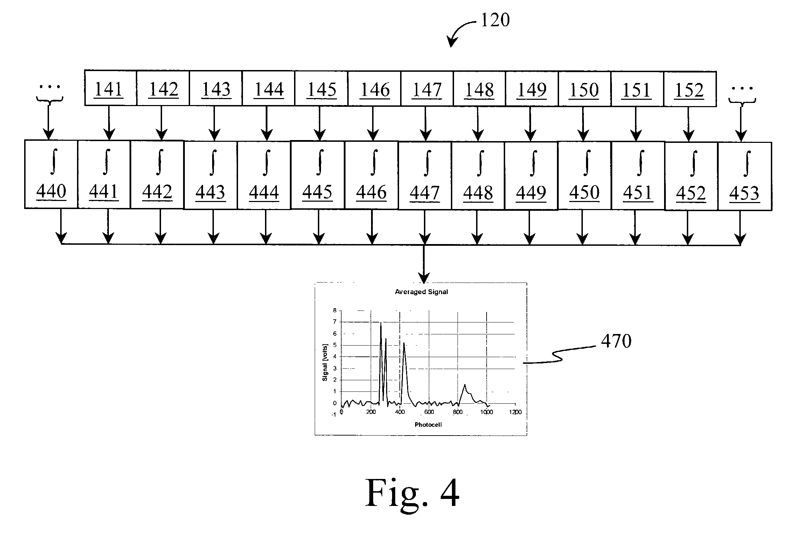

The process of scanning, calculating, and storing the data is depicted in **Fig. 4.** The linear photocell sensor array **120** is shown at the top with twelve photocell sensors **141-152** shown. The ellipses shown to the left of photocell sensor **141** and to the right of photocell sensor **152** indicate there may be more photocell sensors.

The signal from each of the photocell sensors is fed into a set of processing blocks **440-453**. These processing blocks **440-453** may include an Analog to Digital (A/D) converter and an integration, summation, or statistical correlation function. The processing blocks **440-453** may be inherent to the photocells, themselves, if the charge storage capacity of each photocell sensor is adequate for the task, or they may be separate units, carrying out their operations in analog or digital mode. Finally, the resulting, processed data are organized into a chromatogram, as indicated by the plot **470** shown.

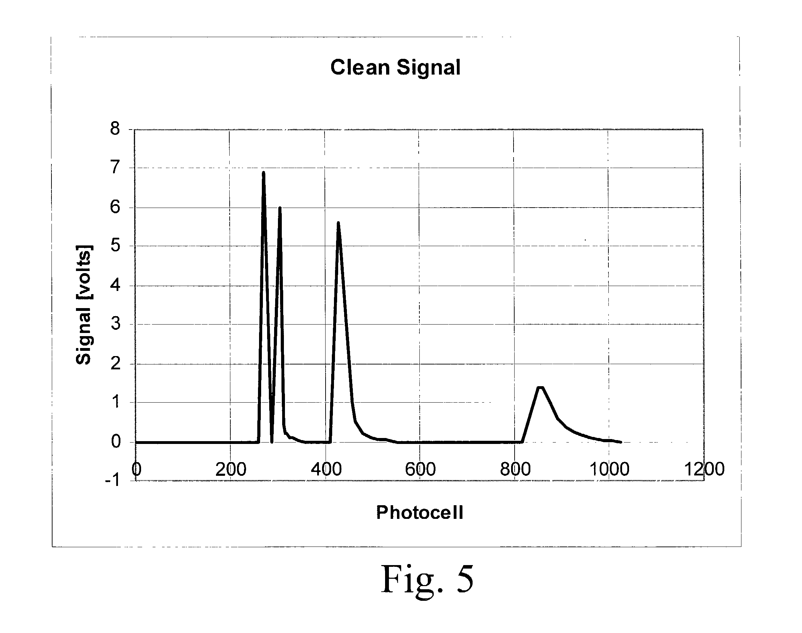

A representative plot of a scan is shown in **Fig. 5.** This plot shows a noise-free signal of the quiescent solution as taken from 1024 photocells. Here, four peaks or spikes are shown. On the abscissa is the photocell sensor number from 1 to 1024, while the ordinate is the signal, as amplified from the photovoltaic sensors, in volts.

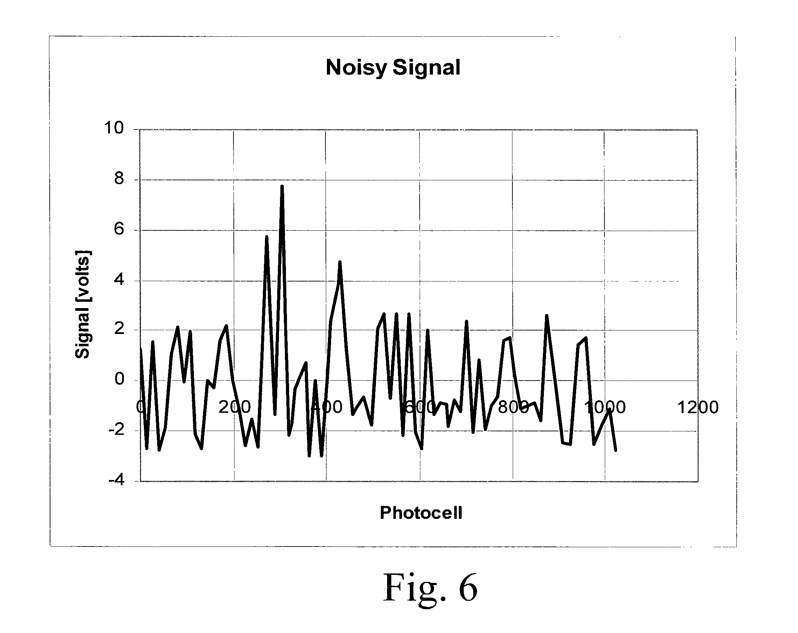

In **Fig. 6** the noise-free signal is shown with white noise superimposed upon it, resulting in a noisy signal. The white noise has a maximum amplitude of three volts. The clean signal cannot be identified due to the noise.

In **Fig. 7,** 100 noisy signals like that shown in **Fig. 6** have been integrated with the time of integration divided out, or arithmetically averaged, or statistically correlated. As can easily be seen in the plot 470, due to the averaging step, the relative fraction of the signal attributable to noise is greatly reduced.

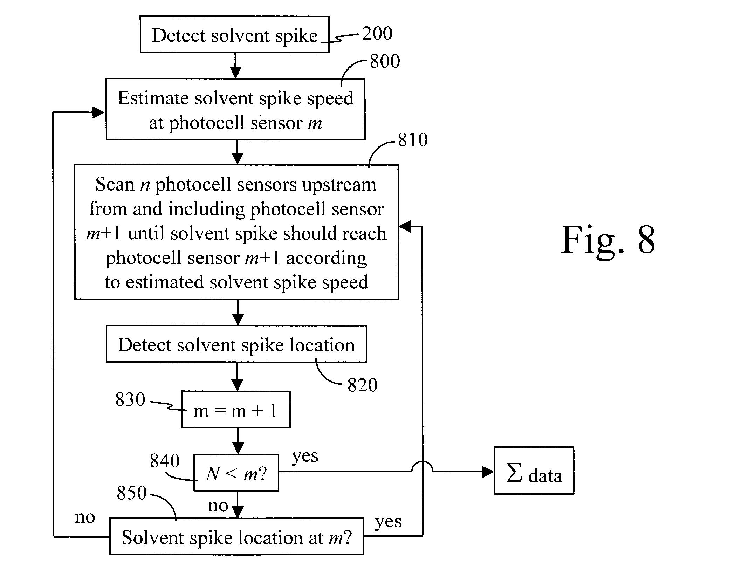

A flow diagram of the second embodiment of the present invention is shown in **Fig. 8.** Once the solvent spike is detected **200,** its speed, $V_{ss}$, is estimated **800** at photocell sensor m, such as the 1005th photocell sensor, as used in the example, above. Then the $n$ ($n$ = 1001 in the above example) photocell sensors from $m+1$ "back" (upstream) are scanned at a rate, $V_{sr}$, such that, when the scan is finished, the solvent spike should have reached photocell sensor m+1 **810.** The scanning speed is calculated as $V_{sr} = nV_{ss}$, where both $V_{sr}$ and $V_{ss}$ are in photocells per unit time.

After the aforementioned scan **810**, the location of the solvent spike is, again, detected **820**, ultimately to ascertain that it did, in fact, reach photocell sensor *m*+1, and no further. Before comparing the location of the solvent spike to photocell sensor *m*+1, the value of *m* is incremented up by one (1.0) **830** and this new value of *m* is tested **840** against *N*, the total number of photocell sensors **141-152** (2048 in the example above), so the process ends when the last photocell sensor is encountered. If $m \leqslant N$ at this point, the location of the solvent spike is compared **850** with the location of the photocell sensor *m*. If the solvent spike is at photocell sensor *m*, the same estimated solvent spike speed is used and the process repeated, scanning *n* photocell sensors upstream from and including the new photocell sensor *m*+1 **810**. If the solvent spike is not at photocell sensor *m*, a new solvent spike speed is estimated **800** before the remainder of the process is repeated as before.

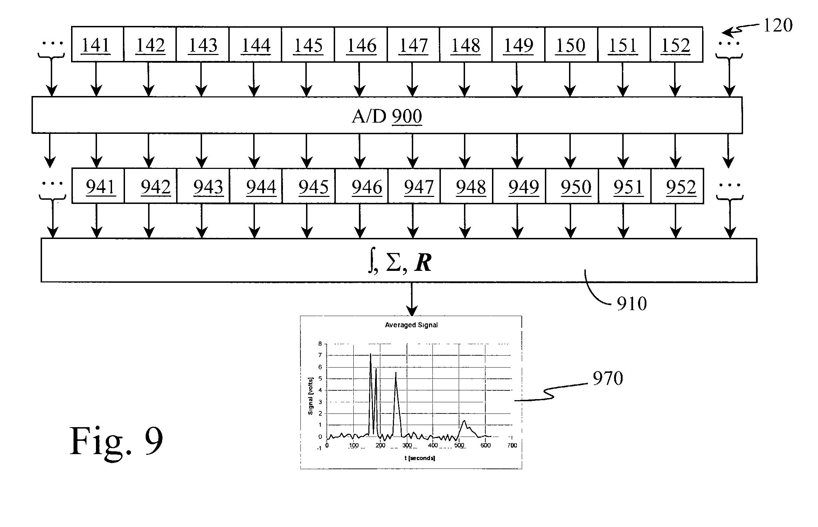

For the present embodiment wherein measurements are made of the flowing solution, the photocell sensors **141-152** are again shown in **Fig. 9** with ellipses shown at each end of the linear array **120** to indicate there may be more photocell sensors than shown. The analog signals from the photocell sensors **141-152** are converted to digital signals in an A/D converter **900**. Because the front of the *n* photocell sensors is shifted such that it moves with the flow, and only *n* photocell sensors are read at each scan, the digital signals, from the first to the last, need only to be stored in memory locations **941-952** from the first to the last. No more shifting is required.

From the memory locations **941-952**, the signal is processed in a calculation function **910** that integrates, sums or statistically correlates each photocell sensors' **141-152** signal to produce a chromatogram, as indicated by the plot **970**.

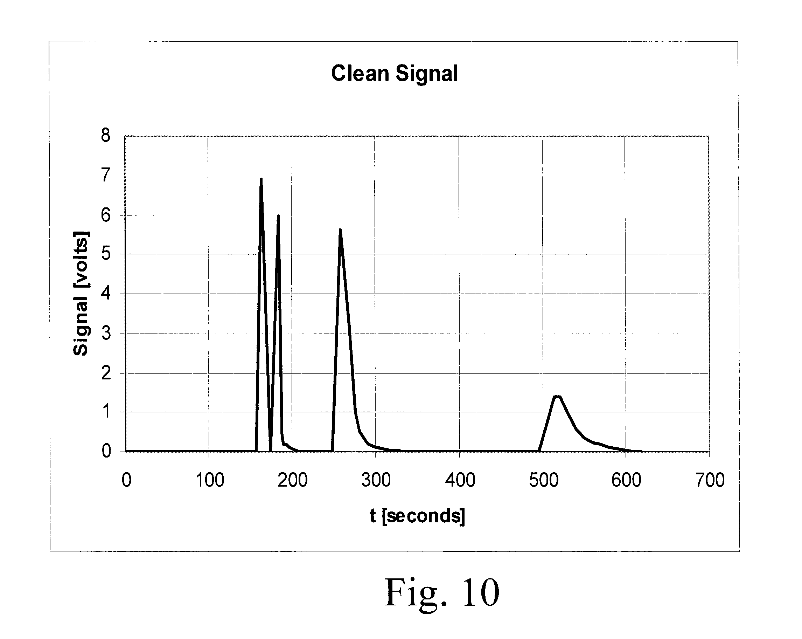

A chromatogram, such as would be produced by the second embodiment of the present invention, is shown in **Fig. 10. Fig. 10** represents a clean (noiseless) HPLC with four peaks. Although the abscissa could be the photocell numbers of the *n* photocell sensors used for each scan, it is just as logical to make the abscissa be time in seconds. The ordinate is, again, the signal, as amplified from the photovoltaic sensors, in volts.

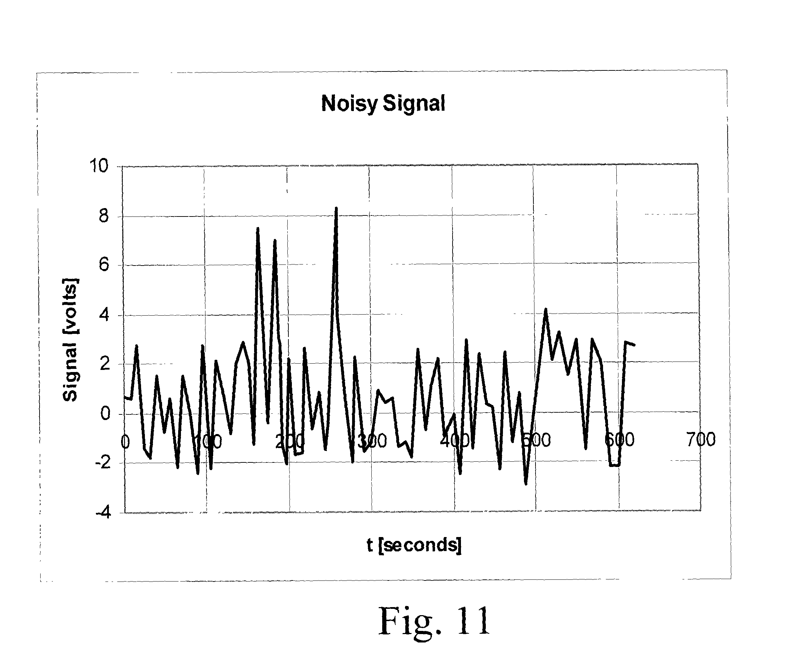

The same signal as shown in **Fig. 10** is replotted in **Fig. 11** with simulated noise superimposed on the clean signal. The white noise has a maximum amplitude of three volts. The clean signal cannot be identified due to the noise.

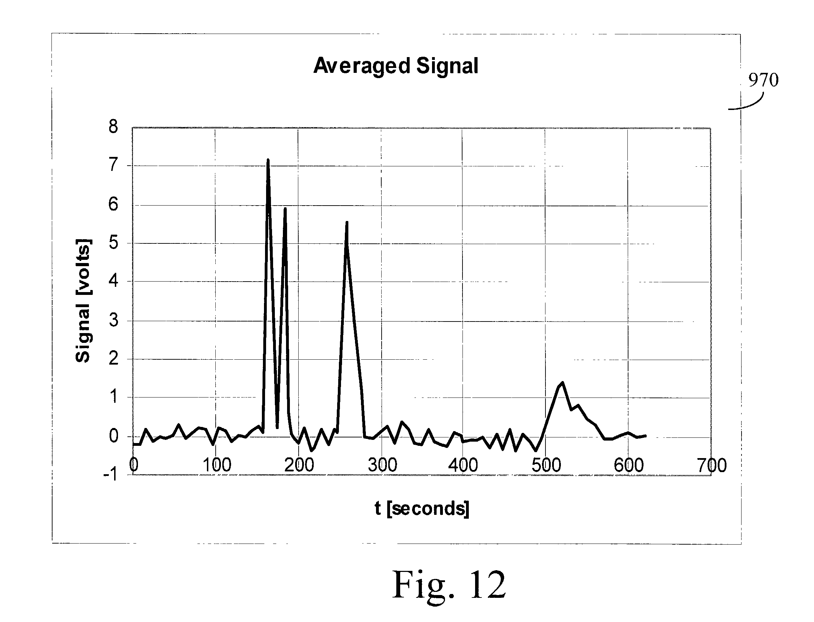

The next step in the analysis is shown in the plot **970** of **Fig. 12.** Here, 100 noisy signals, with the same clean content as shown in **Fig. 10** and different noise (all with a maximum amplitude of three volts), were averaged. The improvement can easily be seen when comparing **Fig. 12** with **Fig. 11.** The improvement is evident, even though only 100 readings were used (in practice, many more could be used). Even the last and smallest peak (seen in **Fig. 10** at about 515 seconds) can be resolved from the noise. The signal could also have been summed or statistically correlated.

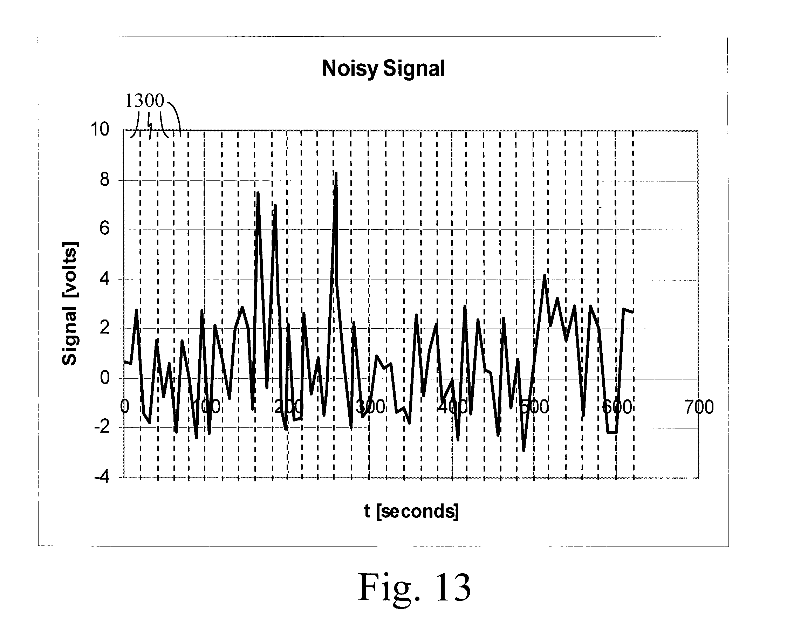

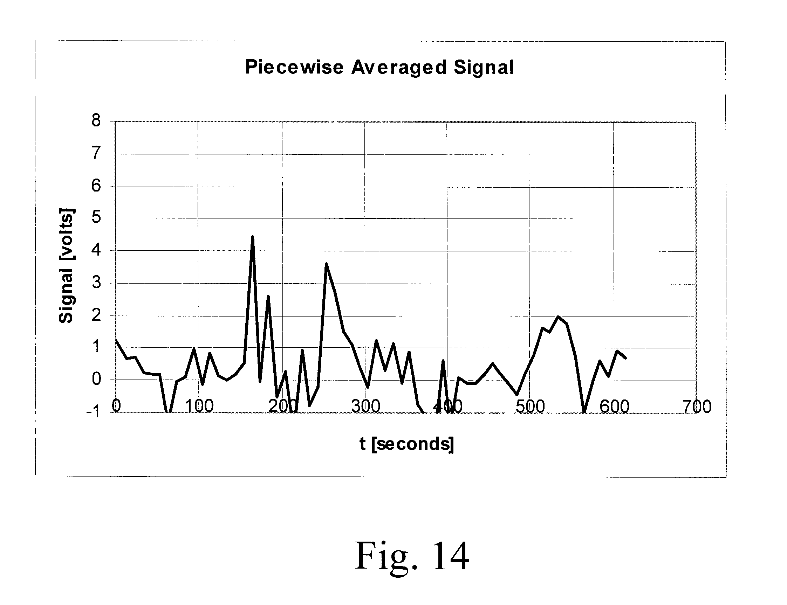

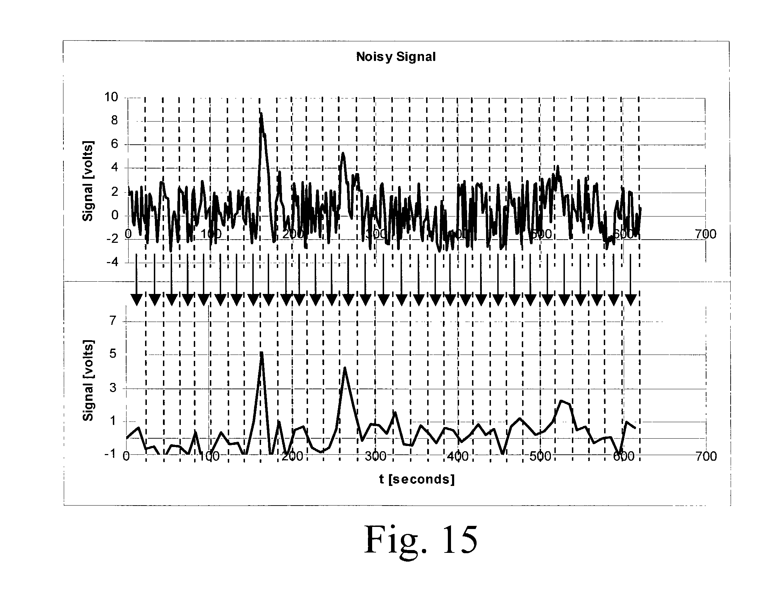

A third embodiment of the present invention is shown in **Figs. 13-17**. In **Fig. 13,** a noisy signal is shown. The dashed lines indicate how the noisy signal is subdivided into segments **1300.** The signal within each segment is averaged, integrated, or statistically correlated. The results are recombined into a new, less noisy signal such as shown in **Fig. 14.** The process is illustrated, symbolically, in **Fig. 15**, where the arrows indicate the flow of information from the noisy signal at the top to the piecewise average, integrated, or statistically correlated signal at the bottom.

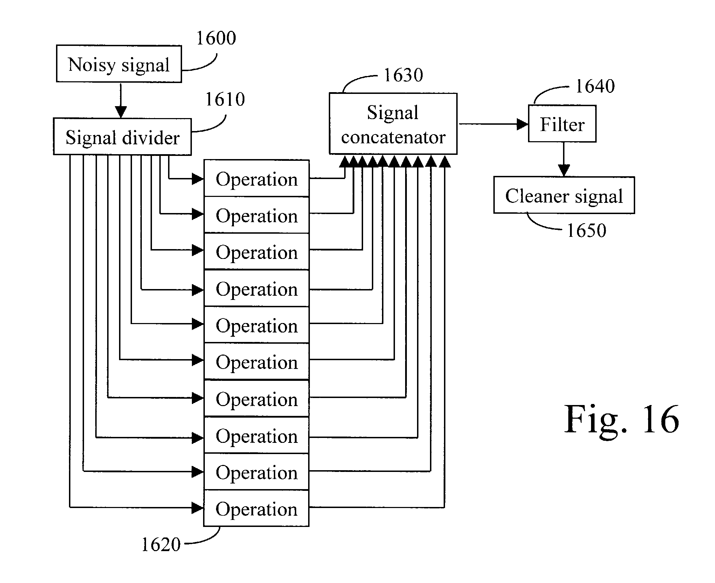

A flow diagram of this third embodiment is shown in **Fig. 16**. A noisy signal **1600**, which may be an analog signal or a digital signal, from a single sensor or a plurality of sensors, is divided into a plurality of segments by a signal divider **1610**. There are ten such segments indicated in **Fig. 16,** but this should be considered a minimum. Each segment passes through a separate operation **1620**, which could be summation, integration or statistical correlation. The resulting signals are concatenated in a concatenation function **1630**, to recreate the signal with less noise. The concatenated signal may, optionally, be passed through a filter **1640.** A suitable filter **1640** is a low-pass filter. An analog filter is used for an analog signal, while a digital signal is used for a discrete signal. The filter **1640** will have the characteristic that it attenuates noise corresponding, in time or frequency, to noise associated with time or frequency of one of the signal segments from the signal divider **1610**. The result, regardless of the use of the optional filter, is a signal **1650** that is cleaner (less noisy) than the noisy signal **1600.**

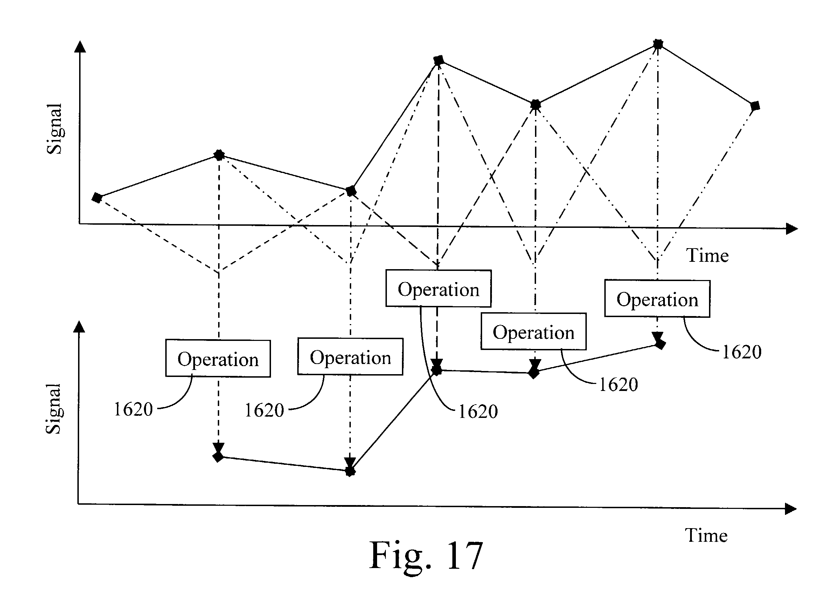

A variation on this third embodiment utilizes a *running* average or other operation wherein each point of a first, noisy signal is replaced by its average, integral, or statistical correlation over a neighborhood of the original point to produce a cleaner signal. This approach is also valid for discrete or analog signals. **Fig. 17** depicts the present embodiment for a discrete signal. In **Fig. 17,** only three points are shown being used for the operation **1620** which, again, could be summation (or averaging), integration, or statistical correlation. In reality, many more points would be used. The top signal depicts a noisy signal. Each point of the lower, cleaner signal is a result of the operation **1620** of a number of points or regions of the noisy signal. Each point of the lower, cleaner signal contains information from some points of the noisy signal also used to determine points neighboring the clean signal point. This variation is not limited to a discrete signal.

Obviously many modifications and variations of the present invention are possible in light of the above teachings. Any number of photocell sensors may be used in the linear arrays. The photocell sensor array need not be linear. It is, therefore, to be understood that within the scope of the appended claims, the invention may be practiced otherwise than as specifically described.

## Claims

1. A method for improving a quality of a signal in High Performance Liquid Chromatography by employing a plurality of stationary sensors, the method comprising:

   (a) sensing information about a same fluid particle with each of the plurality of sensors and producing a plurality of individual signals, one for each stationary sensor, based on said information; and
   (b) summing said plurality of signals to create a signal with greater signal to noise ratio than any of the individual plurality of signals.

2. A method for improving a quality of a signal in High Performance Liquid Chromatography by employing a plurality of stationary sensors, the method comprising:

   (a) sensing information about a same fluid particle with each of the plurality of sensors and producing a plurality of individual signals, one for each stationary sensor, based on said information; and
   (b) statistically correlating said plurality of signals to create a signal with greater signal to noise ratio than any of the individual plurality of signals.

3. An apparatus for improving a quality of a signal in High Performance Liquid Chromatography, the apparatus comprising a plurality of stationary sensors, and:

   (a) means for sensing information about a same fluid particle with each of the plurality of sensors with means for producing a plurality of individual signals, one for each stationary sensor, based on said information; and
   (b) means for summing said plurality of signals to create a signal with greater signal to noise ratio than any of the individual plurality of signals.

4. An apparatus for improving a quality of a signal in High Performance Liquid Chromatography, the apparatus comprising a plurality of stationary sensors, and:

   (a) means for sensing information about a same fluid particle with each of the plurality of sensors with means for producing a plurality of individual signals, one for each stationary sensor, based on said information; and
   (b) means for statistically correlating said plurality of signals to create a signal with greater signal to noise ratio than any of the individual plurality of signals.

5. A method for improving a quality of a signal in a separation scheme by employing a plurality of stationary sensors, the method comprising:

   (a) sensing information about a fluid particle with at least some of the plurality of stationary sensors and producing at least one signal for each stationary sensor used, based on said information;
   (b) operating on the signals using an operation selected from a group consisting of integration, summation, and statistical correlation to create a signal with greater signal to noise ratio than any of the individual plurality of signals; and
   (c) using said signal with greater signal to noise ratio to produce a chromatogram.

6. A method for improving a quality of a signal in a fluid-based separation scheme by employing a plurality of stationary sensors, the method comprising:

   (a) stopping a fluid solution adjacent to the plurality of stationary sensors;
   (b) sensing information about the solution with at least some of the plurality of stationary sensors;
   (c) operating on signals from each of the at least some of the plurality of stationary sensors using an operation selected from a group consisting of integration, summation, and statistical correlation to create a signal with greater signal to noise ratio than any of the individual plurality of signals; and
   (d) using said signal with greater signal to noise ratio to produce a chromatogram.

7. An apparatus for improving a quality of a signal in a fluid-based separation scheme, the apparatus comprising:

   (a) a plurality of stationary sensors for sensing information about a fluid particle; and
   (b) at least one calculation unit operating on the signals using an operation selected from a group consisting of integration, summation, and statistical correlation to create a signal with greater signal to noise ratio than any of the individual plurality of signals.

8. An apparatus for improving a quality of a signal in a capillary separation scheme by employing a plurality of stationary sensors, the apparatus comprising:

(a) means for stopping a flow of a solution adjacent to the plurality of stationary sensors;
(b) sensors for sensing information about the solution with at least some of the plurality of stationary sensors; and
(c) at least one calculation unit operating on signals from each of the at least some of the plurality of stationary sensors using an operation selected from a group consisting of integration, summation, and statistical correlation to create a signal with greater signal to noise ratio than any of the individual plurality of signals.

9. A method for improving a quality of a first signal in a chemical separation scheme, said method comprising the steps of:

(a) dividing the first signal into a plurality of segments;
(b) operating on signals within each of the plurality of segments using an operation selected from a group consisting of integration, summation, and statistical correlation; and
(c) concatenating the results of the operation from the plurality of the segments into a less noisy, second signal.

10. An apparatus for improving a quality of a first signal in a chemical separation scheme, said apparatus comprising:

(a) a signal divider for dividing the first signal into a plurality of segments;
(b) a computer for operating on signals within each of the plurality of segments using an operation selected from a group consisting of integration, summation, and statistical correlation; and
(c) a concatenator for concatenating the results of the operation from the plurality of the segments into a less noisy, second signal.

11. A method for improving a quality of a signal in a fluid-based separation scheme by employing a plurality of sensors, said sensors being stationary relative to a capillary tube, and a three-way valve, the method comprising:

(a) stopping a fluid solution in the capillary tube adjacent to the plurality of stationary sensors by diverting the fluid solution to a waste port of the three-way valve;
(b) sensing information about the solution with at least some of the plurality of stationary sensors;
(c) operating on signals from each of the at least some of the plurality of stationary sensors using an operation selected from a group consisting of integration, summation, and statistical correlation to create a signal with greater signal to noise ratio than any of the individual plurality of signals; and
(d) using said signal with greater signal to noise ratio to produce a chromatogram.

12. An apparatus for improving a quality of a signal in a capillary separation scheme by employing a capillary tube in which fluid flows adjacent to a plurality of sensors, said sensors being stationary relative to the capillary tube, the apparatus comprising:

(a) a three-way valve comprising a port operably connected to the capillary tube and a waste port, said three-way valve for diverting a flow of a solution to a waste port of said three-way valve;
(b) sensors for sensing optic information about the solution with at least some of the plurality of stationary sensors; and
(c) at least one calculation unit operating on signals from each of the at least some of the plurality of stationary sensors using an operation selected from a group consisting of integration, summation, and statistical correlation to create a signal with greater signal to noise ratio than any of the individual plurality of signals.

13. The method of claim 1 or 2 wherein a delay is incorporated into said individual signals to account for different times at which the signals are produced.

14. The method of claim 13 wherein the delay is calculated as a function of a speed of a fluid flow and a distance between sensor center points.

15. The method of claim 14 wherein the delay is calculated as a ratio of a distance between sensor center points and twice an average speed of the fluid flow.

16. The method of claim 14 wherein the delay is applied to a first signal from a first sensor before summing the first signal with a second signal from a second sensor spatially immediately adjacent to the first sensor.

17. The method of claim 14 wherein the plurality of sensors number $N$ with a most upstream sensor numbered $N$, a next sensor immediately downstream numbered $N$-1, while the last sensor is numbered 1; the $n$th delay applied to the signal generated by an $n$th sensor being calculated as $n$-1 times the delay calculated as the function of the average speed of the fluid flow; a single summation being used for all signals after applying the associated delays.

18. The method of claim **1** wherein the summation is subsequently divided by a number of the plurality of sensors to produce an average.

19. The method of claim **1** or **2** wherein signals are produced at least piecewise continuously by each sensor and stored, digitally.

20. The method of claim **19** wherein portions of the at least piecewise continuous signals containing information about the same fluid particle are selected for summation.

21. The method of claim **1** or **2** including timers for each sensor, the timers dictating when the sensors' signals will be stored for the same fluid particle.

22. The method of claim **14** or **15** wherein the speed of the flow of fluid is determined by the steps comprising:

(a) heating a particle of fluid with a pulsed light signal at a known point in the flow;
(b) determining when the particle of fluid passes a downstream point having a known distance from the known point at which it was heated by detecting a difference in its refractive index;
(c) measuring the time between heating the fluid particle to its detection at the downstream point; and
(d) dividing the known distance between the point at which the fluid particle was heated to the downstream point by the measured time between heating the fluid particle to its detection at the downstream point.

23. The method of claim **22** wherein detecting a difference in its refractive index is carried out using a visible-light source and a visible-light sensor.

24. The apparatus of claim **3** or **4** including means to incorporate a delay into said individual signals to account for different times at which the signals are produced.

25. The apparatus of claim **24** including means to calculate the delay as a function of a speed of a fluid flow and a distance between sensor center points.

26. The apparatus of claim **25** including means to calculate the delay as a ratio of a distance between sensor center points and twice an average speed of the fluid flow.

27. The apparatus of claim **25** including means to apply the delay to a first signal from a first sensor before summing the first signal with a second signal from a second sensor spatially immediately adjacent to the first sensor.

28. The apparatus of claim **25** wherein the plurality of sensors number $N$ with a most upstream sensor numbered $N$, a next sensor immediately downstream numbered $N$-1, while the last sensor is numbered 1; the apparatus including means to calculate the $n^{th}$ delay applied to the signal generated by an $n^{th}$ sensor as $n$-1 times the delay calculated as the function of the average speed of the fluid flow; and means to sum all signals in a single summation after applying the associated delays.

29. The apparatus of claim **3** including means for subsequently dividing the summation by a number of the plurality of sensors to produce an average.

30. The apparatus of claim **3** or **4** including means for continuously producing signals by each sensor and means for digitally storing said continuous signals.

31. The apparatus of claim **30** including means to select portions of the continuous signals containing information about the same fluid particle for summation.

32. The apparatus of claim **3** or **4** including timers for each sensor, the timers dictating when the sensors' signals will be stored for the same fluid particle.

33. The apparatus of claim **25** including fluid flow speed determination means comprising:

(a) a pulsed near infrared light source for heating a particle of fluid at a known point in the flow;
(b) a sensor to determine when the particle of fluid passes a downstream point having a known distance from the known point at which it was heated by detecting a difference in its refractive index;
(c) a timer for measuring the time between heating the fluid particle to its detection at the downstream point; and
(d) means for dividing the known distance between the point at which the fluid particle was heated to the downstream point by the measured time between heating the fluid particle to its detection at the downstream point.

34. The method of claim **14** additionally comprising the steps of:

(a) continuously monitoring at least two of said plurality of sensors;
(b) measuring the time taken for the detection of a chromatographic solvent spike or a marker as it transits between the said sensors; and using the said time to establish the said delay.

35. The apparatus of claim **3** or **4** additionally comprising a timer for measuring the time taken for the detection of a chromatographic solvent spike or a marker as it transits between at least two of said plurality of sensors; and using the said time to establish the said delay.

36. The apparatus of claim **33** including a visible-light source and a visible-light sensor for detecting a difference in the refractive index.

37. The method of claim **5** wherein additional information is sensed about a plurality of fluid particles, said additional information being combined to produce a chromatogram.

38. The method of claim **5** wherein the fluid particle flows in a capillary tube along which the plurality of sensors is arrayed, and wherein the step of sensing information about a fluid particle with at least some of the plurality of stationary sensors comprises the steps of:

(a) selecting a first sensor when the fluid particle is located adjacent to said first sensor;
(b) sensing information about the fluid particle with the first sensor;
(c) selecting a second sensor when the fluid particle is no longer located adjacent to the first sensor but is adjacent to the second sensor; and
(d) sensing information about the fluid particle with the second sensor.

39. The method of claim **38** wherein the location of the fluid particle is determined by detecting a marker spike.

40. The method of claim **39** wherein the marker spike arises from a difference between a refractive index between a sample solvent and a separation solvent.

41. The method of claim **39** wherein the marker spike arises from a spike reproducibly related to at least one separated peak.

42. The method of claim **39** wherein the marker spike, reproducibly related to a separated peak, is upstream of all sample peaks in the separation.

43. The method of claim **39** wherein the marker spike is an absorbance spike.

44. The method of claim **43** wherein the marker spike is generated by adding an absorbance marker with a reproducible relationship to a location of the sample injection.

45. The method of claim **43** wherein the marker spike is generated by adding an absorbance marker with a reproducible relationship to a timing of a sample injection.

46. The method of claim **45** wherein the absorbance spike arises from an absorbance marker added in a solvent.

47. The method of claim **38** wherein a second plurality of sensors sense information about additional fluid particles during a time when the fluid particle is adjacent to the first sensor.

48. The method of claim **47** wherein a number of the second plurality of sensors is predetermined.

49. The method of claim **47** wherein the sensed information from the second plurality of sensors is assembled into a chromatogram.

50. The method of claim **5** wherein the plurality of sensors are photocell sensors.

51. The method of claim **6** wherein the step of stopping the fluid solution comprises the steps of:

(a) detecting a solvent spike in the solution;
(b) tracking said solvent spike as it moves; and
(c) stopping the solvent spike in the neighborhood of a predetermined photocell sensor.

52. The method of claim **6** wherein a predetermined number of sensors are used as the at least some of the plurality of sensors.

53. The method of claim **6** wherein the operated on signals are assembled into a chromatogram.

54. The method of claim **6** wherein the plurality of sensors are photocell sensors.

55. The apparatus of claim **7** wherein additional information is sensed about a plurality of fluid particles, the apparatus additionally comprising means for combining said additional information to produce a chromatogram.

56. The apparatus of claim **7** wherein the fluid particle flows in a capillary tube along which the plurality of sensors is arrayed, and wherein sensing information about a fluid particle with the plurality of stationary sensors is accomplished with apparatus comprising:

(a) a first selector for selecting a first sensor when the fluid particle is located adjacent to said first sensor; and

(b) a second selector for selecting a second sensor when the fluid particle is no longer located adjacent to the first sensor but is adjacent to the second sensor.

**57.** The apparatus of claim **56** additionally comprising means for determining the location of the fluid particle by detecting a solvent spike.

**58.** The apparatus of claim **56** additionally comprising a second plurality of sensors to sense information about additional fluid particles during a time when the fluid particle is adjacent to the first sensor.

**59.** The apparatus of claim **58** including means to predetermine a quantity of the second plurality of sensors.

**60.** The apparatus of claim **58** including means for assembling the sensed information from the second plurality of sensors into a chromatogram.

**61.** The apparatus of claim **7** wherein the plurality of sensors are photocell sensors.

**62.** The apparatus of claim **8** wherein determining an appropriate stopping point for the flow of the solution comprises the steps of:

(a) means for detecting a solvent spike in the solution;

(b) means for tracking said solvent spike as it flows; and

(c) means for stopping the solvent spike at a predetermined photocell sensor.

**63.** The apparatus of claim **8** including a means for determining a predetermined quantity of sensors to be used as the at least some of the plurality of sensors.

**64.** The apparatus of claim **8** including means to assemble the operated on signals into a chromatogram.

**65.** The apparatus of claim **8** wherein the plurality of sensors are photocell sensors.

**66.** The method of claim **9** wherein the first signal is a sequential signal from a sequential separation process.

**67.** The method of claim **9** or **66** additionally comprising the step of filtering the second signal.

**68.** The method of claim **67** wherein the filtering is done with an analog filter.

**69.** The method of claim **67** wherein the filtering is done with a digital filter.

**70.** The method of claim **67** wherein said filtering comprises a low-pass analog filter having the following characteristic: it attenuates noise or error corresponding, in time or frequency, to noise or error associated with time or frequency of one of said signal segments.

**71.** The method of claim **66** or **67** wherein the step of dividing the first signal comprises dividing the first signal into at least 10 segments, each segment being equal by flow.

**72.** The method of claim **66** or **67** wherein the step of dividing the first signal comprises dividing the first signal into at least 10 segments, each segment being equal by volume.

**73.** The method of claim **9** wherein the segments overlap.

**74.** The method of claim **73** wherein the first signal is a discrete signal, said method comprising the steps of:

(a) selecting a predetermined number of consecutive points of the first signal, said number of points comprising a first and a last point, considered chronologically;

(b) operating on the values of the consecutive points using an operation selected from a group consisting of integration, summation, and statistical correlation;

(c) selecting a next predetermined number of consecutive points, wherein the first point used in the previous set of points is not used;

(d) operating on the values of the consecutive points using an operation selected from a group consisting of integration, summation, and statistical correlation; and

(e) repeating these steps until all points of the first signal have been included in the operation.

**75.** The apparatus of claim **10** wherein the first signal is a sequential signal from a sequential separation process.

**76.** The apparatus of claim **10** or **75** additionally comprising a filter with which to filter the second signal.

**77.** The apparatus of claim **76** wherein the filter is an analog filter.

**78.** The apparatus of claim **76** wherein the filter is a digital filter.

79. The apparatus of claim **76** wherein said filter comprises a low-pass analog filter having the following characteristic: it attenuates noise or error corresponding, in time or frequency, to noise or error associated with time or frequency of one of said signal segments.

80. The apparatus of claim **76** wherein the signal divider for dividing the first signal comprises means for dividing the first signal into at least 10 segments, each segment being equal by flow.

81. The apparatus of claim **76** wherein the signal divider for dividing the first signal comprises means for dividing the first signal into at least 10 segments, each segment being equal by volume.

82. The apparatus of claim **10** wherein the segments overlap.

83. The apparatus of claim **82** wherein the first signal is a discrete signal, said apparatus comprising:

(a) means for selecting a predetermined number of consecutive points of the first signal, said number of points comprising a first and a last point, considered chronologically;
(b) a computer for operating on the values of the consecutive points using an operation selected from a group consisting of integration, summation, and statistical correlation;
(c) means for selecting a next predetermined number of consecutive points, wherein the first point used in the previous set of points is not used;
(d) a computer for operating on the values of the consecutive points using an operation selected from a group consisting of integration, summation, and statistical correlation; and
(e) means for repeating these steps until all points of the first signal have been included in the operation.

84. The method of claim **11** wherein the step of stopping the fluid solution comprises the steps of:

(a) detecting a leading edge indicator in the solution when it is in a neighborhood of a predetermined photocell sensor;
(b) diverting the fluid solution to the waste port of the three-way valve when the leading edge indicator is detected in the neighborhood of a predetermined photocell sensor.

85. The method of claim **84** wherein the leading edge indicator is a solvent spike.

86. The method of claim **84** wherein the leading edge indicator is a plug of fluid having significantly different optic characteristics when compared to a remainder of the fluid solution.

87. The method of claim **11** wherein a predetermined number of sensors are used as the at least some of the plurality of sensors.

88. The method of claim **11** wherein the operated on signals are assembled into a chromatogram.

89. The method of claim **11** wherein the plurality of sensors are photocell sensors.

90. The method of claim **11** wherein a pressure of the fluid solution is relieved when the fluid solution is diverted to the waste port of the three-way valve, and a flow of said fluid solution stops when the pressure is fully relieved.

91. The apparatus of claim **12** additionally comprising an apparatus for determining an appropriate stopping point for the flow of the solution comprising:

(a) a leading edge indicator in the solution; and
(b) at least one sensor for detecting the leading edge indicator at a predetermined point.

92. The apparatus of claim **91** wherein the leading edge indicator comprises a solvent spike.

93. The apparatus of claim **91** wherein the leading edge indicator comprises a plug of fluid having significantly different optic characteristics than a remainder of the solution.

94. The apparatus of claim **12** including means to assemble the operated on signals into a chromatogram.

95. The apparatus of claim **12** wherein the plurality of sensors comprise photocell sensors.

Fig. 1

Fig. 2

```
            ┌─────────────────────────┐  ⟋─ 200
            │   Detect solvent spike   │
            │  or other leading marker │
            └─────────────────────────┘
                        │         ⟋─ 210
                        ▼
   ┌──────────────────────────────────────────┐
   │ · Stop solute flow with leading edge       │
   │  indicator at predetermined photocell      │
   │  sensor by modulation of the three-way     │
   │  valve to redirect flow to waste           │
   └──────────────────────────────────────────┘
                        │              ⟋─ 220
                        ▼
   ┌──────────────────────────────────────────┐
   │  Scan photocell sensor array continuously  │
   └──────────────────────────────────────────┘
                        │
                        ▼
   ┌──────────────────────────────────────────┐
   │   Integrate photocell sensor scan          │
   │   data over time              ⟋─ 230       │
   └──────────────────────────────────────────┘
```

Fig. 2

```
            ┌─────────────────────────┐  ⟋─ 200
            │   Detect solvent spike   │
            │  or other leading marker │
            └─────────────────────────┘
                        │         ⟋─ 210
                        ▼
   ┌──────────────────────────────────────────┐
   │  Stop solute flow with leading edge        │
   │  indicator at predetermined photocell      │
   │  sensor by modulation of the three-way     │
   │  valve to redirect flow to waste           │
   └──────────────────────────────────────────┘
    320 ─┐               │
         ▼               ▼
   ┌──────────────────────────────────────────┐
   │  Scan photocell sensor array repeatedly    │
   └──────────────────────────────────────────┘
                        │
                        ▼
   ┌──────────────────────────────────────────┐
   │  Sum, average, or statistically            │
 330 ─│  correlate set of photocell               │
   │  sensor scan data                          │
   └──────────────────────────────────────────┘
```

Fig. 3

EP 1 467 204 A2

EP 1 467 204 A2

120

| 141 | 142 | 143 | 144 | 145 | 146 | 147 | 148 | 149 | 150 | 151 | 152 |

| ∫ | ∫ | ∫ | ∫ | ∫ | ∫ | ∫ | ∫ | ∫ | ∫ | ∫ | ∫ | ∫ | ∫ |
| 440 | 441 | 442 | 443 | 444 | 445 | 446 | 447 | 448 | 449 | 450 | 451 | 452 | 453 |

Averaged Signal

470

Fig. 4

**Clean Signal**

Fig. 5

**Noisy Signal**

Fig. 6

EP 1 467 204 A2

## Averaged Signal

470

Fig. 7

EP 1 467 204 A2

Detect solvent spike — 200

— 800

Estimate solvent spike speed
at photocell sensor $m$

— 810

Scan $n$ photocell sensors upstream
from and including photocell sensor
$m+1$ until solvent spike should reach
photocell sensor $m+1$ according
to estimated solvent spike speed

Detect solvent spike location

— 820

830 — $m = m + 1$

840 — $N < m$?  yes

$\Sigma$ data

850 — no

no  Solvent spike location at $m$?  yes

Fig. 8

| ··· | 141 | 142 | 143 | 144 | 145 | 146 | 147 | 148 | 149 | 150 | 151 | 152 | ··· | ← 120 |

A/D 900

| ··· | 941 | 942 | 943 | 944 | 945 | 946 | 947 | 948 | 949 | 950 | 951 | 952 | ··· |

$\int, \Sigma, \boldsymbol{R}$

910

970

Fig. 9

Fig. 10

EP 1 467 204 A2

**Noisy Signal**

Fig. 11

Fig. 12

Fig. 13

**Piecewise Averaged Signal**

Fig. 14

Fig. 15

Fig. 16

Fig. 17

EP 1 467 204 A2